**Europäisches Patentamt**

**European Patent Office**

**Office européen des brevets**

(19)

(11) Veröffentlichungsnummer : **0 047 927**
**B1**

(12) # EUROPÄISCHE PATENTSCHRIFT

(45) Veröffentlichungstag der Patentschrift :
**11.12.85**

(21) Anmeldenummer : **81106937.6**

(22) Anmeldetag : **04.09.81**

(51) Int. Cl.⁴ : **B 62 M 9/12**

(54) **Fahrrad mit einer Kettenschaltung.**

(30) Priorität : 17.09.80 CH 6938/80

(43) Veröffentlichungstag der Anmeldung :
**24.03.82 Patentblatt 82/12**

(45) Bekanntmachung des Hinweises auf die Patenterteilung : **11.12.85 Patentblatt 85/50**

(84) Benannte Vertragsstaaten :
**AT BE DE FR GB IT NL SE**

(56) Entgegenhaltungen :
**FR-A- 2 415 036**
**US-A- 2 007 611**
**US-A- 3 772 932**
**US-A- 4 047 603**
**US-A- 4 089 231**

(73) Patentinhaber : **Krampera, Jiri**
**Bertastrasse 34**
**CH-8003 Zürich (CH)**

(72) Erfinder : **Krampera, Jiri**
**Bertastrasse 34**
**CH-8003 Zürich (CH)**

(74) Vertreter : **Quehl, Horst Max, Dipl.-Ing.**
**Patentanwalt Promenadengasse 18**
**CH-8001 Zürich (CH)**

**Beschreibung**

Die Erfindung betrifft ein Fahrrad mit einer Kettenschaltung, deren am angetriebenen Rad befestigter Satz von Zahnkränzen mindestens sechs Zahnkränze aufweist und mit mindestens einem antreibenden Zahnkranz, wobei der Durchmesserunterschied zwischen benachbarten Zahnkränzen mindestens zwei Zähnen entspricht.

Bei der Konstruktion von Kettenschaltungen für Fahrräder besteht seit langem das Bestreben, möglichst viele Schaltstufen sowie einen möglichst grossen Gesamtübersetzungsbereich zu erzielen. Fortschritte konnten dabei durch Vergrösserung der Anzahl der angetriebenen Zahnkränze erreicht werden. Die FR-A-2 415 036 zeigt beispielsweise einen Satz von sechs angetriebenen Zahnkränzen. Die bisherigen Massnahmen zur Vergrösserung der Anzahl der angetriebenen Zahnkränze bestanden in der Verwendung von schmaleren Ketten und der damit möglichen engeren Anordnung der Zahnkränze und/oder in der Verbreiterung des Raumes für die Anordnung des angetriebenen Zahnkranzsatzes. Letztere Massnahme führt jedoch zu einer weiteren Vergrösserung der unerwünschten Asymmetrie der Radausspeichung. Mehr als ein antreibender Zahnkranz bringt zwar eine weitere Vergrösserung der Anzahl der möglichen Schaltstufen, jedoch ist die praktisch nutzbare Vergrösserung wesentlich kleiner als allgemein erwartet wird, da sich zahlreiche Gänge überdecken und ausserdem aufgrund des maximal zulässigen Schräglaufs der Kette bestimmte Zahnkranzkombinationen nicht anwendbar sind.

Der vorliegenden Erfindung liegt die Aufgabe zugrunde, bei einer vorgegebenen Breite der Kette und einer vorgegebenen Breite des zur Verfügung stehenden Raumes für die Anordnung des angetriebenen Zahnkranzsatzes, eine grössere Anzahl von durch die Kette direkt angetriebenen Zahnkränzen vorzusehen als aufgrund bisheriger Konstruktionsprinzipien möglich war, so dass selbst bei Verwendung von nur einem antreibenden Zahnkranz eine ausreichende Anzahl von Gängen und ein genügend grosser Gesamtübersetzungsbereich zur Verfügung steht, durch den auch untrainierte Radfahrer sehr grosse und lange Strassensteigungen ohne Ueberanstrengung bewältigen können. Die Lösung dieser Aufgabe erfolgt aufgrund der kennzeichnenden Merkmale des Patentanspruchs 1.

Aufgrund der Erfindung werden somit einander benachbarte Zahnkränze näher aneinander montiert als dies dem Fachmann bisher als möglich erschien. Es hat sich gezeigt, dass auf diese Weise mindestens ein zusätzlicher Zahnkranz montierbar ist, ohne Aenderungen an der Nabe vornehmen zu müssen oder einen nicht üblich dimensionierten Fahrradrahmen verwenden zu müssen.

Bisher wurde stets davon ausgegangen, dass die Kette in jedem Fall in den Raum zwischen zwei ihr seitlich benachbarte Zahnkränze hineinpassen muss. Es wurde erkannt, dass dieser Grundsatz nur bei Rennfahrrädern eingehalten werden muss, wo Durchmesserunterschiede entsprechend nur einem Zahn zwischen benachbarten Zahnkränzen vorkommen. Bei Sport- und Tourenfahrrädern, wo diese Durchmesserunterschiede mindestens zwei Zähnen entsprechen, kann jedoch die erfindungsgemässe Konstruktion angewendet werden.

Die Erfindung ist auch im Bereich der kleineren Zahnkränze des Zahnkranzsatzes anwendbar, da in diesem Fall aufgrund der erfindungsgemässen Merkmale die Kette durch Anlaufen an die Zahnkranzseitenfläche des angrenzenden grösseren Zahnkranzes seitlich in Richtung zu dem angrenzenden kleineren Zahnkranz auf dem Zahnkranz verschoben wird, mit dem sie sich in Eingriff befindet, so dass die Zähne, bezogen auf die Kette, axial versetzt in die Kettenglieder eingreifen. Bei den grösseren Zahnkränzen des Zahnkranzsatzes erfolgt dieser axial versetzte Eingriff ohnehin aufgrund des Schräglaufs der Kette in Richtung zu dem antreibenden vorderen Zahnkranz. Somit überragt ein Teil der Kette aufgrund der Erfindung einen Teil der Breite des angrenzenden kleineren Zahnkranzes.

Um auch bei einer Durchmesserdifferenz entsprechend zwei Zähnen zwischen benachbarten Zahnkränzen dieses teilweise Ueberragen des angrenzenden kleineren Zahnkranzes durch die Kette verwirklichen zu können, kann in Ausführungsform der Erfindung an der einem grösseren Zahnkranz zugekehrten Seite der entsprechenden Zahnkränze im äusseren Bereich der Zähne eine Ausnehmung vorgesehen sein, in der ein Teil der Kette mit Spiel läuft, so dass Raum geschaffen ist für die erwähnte seitliche Verschiebung der Kette in Richtung zu dem angrenzenden kleineren Zahnkranz.

Eine weitere Verschmälerung des hinteren Satzes von Zahnkränzen wird möglich, indem die grösseren Zahnkränze im Bereich ihres Kontaktes mit der Kette schmaler ausgeführt werden als in ihrem inneren radialen Bereich. Die Ausführbarkeit einer solchen Massnahme ohne einen vorzeitigen Verschleiss der Kette oder Zähne ergibt sich dadurch, dass bei den grösseren Zahnkränzen die Belastung sich auf eine entsprechend grössere Anzahl von im Eingriff befindlichen Zähnen verteilt und ausserdem diese sogenannten Berggänge weniger benutzt werden als die Gänge im Bereich des Normalganges entsprechend einer zurückgelegten Distanz des Fahrrades von ca. 4,50 bis 5,70 m bei einer Kurbelumdrehung.

Aufgrund üblicher Herstellungsverfahren kommt es vor allem bei grösseren Zahnkränzen oft zu grösseren Abweichungen aus der Ebene des Zahnrades durch Verwerfungen, so dass sich aufgrund der somit erforderlichen Toleranzen eine grössere effektive Breite des Zahnrades ergeben würde als erwünscht ist. Zur Vermeidung dieses Nachteils wird gemäss einer weiteren Ausgestaltung der Erfindung zumindest zwischen den grösseren Zahnkränzen des angetriebenen Zahnkranzsatzes jeweils ein Zwischenring angeordnet, dessen äusserer Durchmesser so gross gewählt ist, dass ein Kontakt mit den Laschen der Kette im Bereich der Zahnwurzeln gerade vermieden wird. Durch diese Zwischenringe ergibt sich eine seitliche Abstützung der in axialer Richtung miteinander verspannten Zahnkränze und damit eine geringere seitliche Massabweichung der Zahnkränze aus ihrer Ebene bzw. eine Verschmälerung des durch Zwischenringe eingespannten Zahnkranzes. Dies führt wiederum zu einer Verschmälerung des gesamten Zahnkranzsatzes.

Im folgenden wird die Erfindung anhand der Zeichnungen näher erläutert. Es zeigen :

Figur 1 eine vereinfachte Darstellung eines die Kettenschaltung aufweisenden Teiles eines Fahrrades von oben,

Figur 2 einen Teil des halben Radialschnittes eines im Eingriff mit der Kette befindlichen Teiles eines Zahnkranzsatzes entsprechend dem Stand der Technik, und

Figur 3-5 Darstellungen entsprechend Fig. 2 von drei verschiedenen erfindungsgemässen Ausführungsformen eines Zahnkranzsatzes.

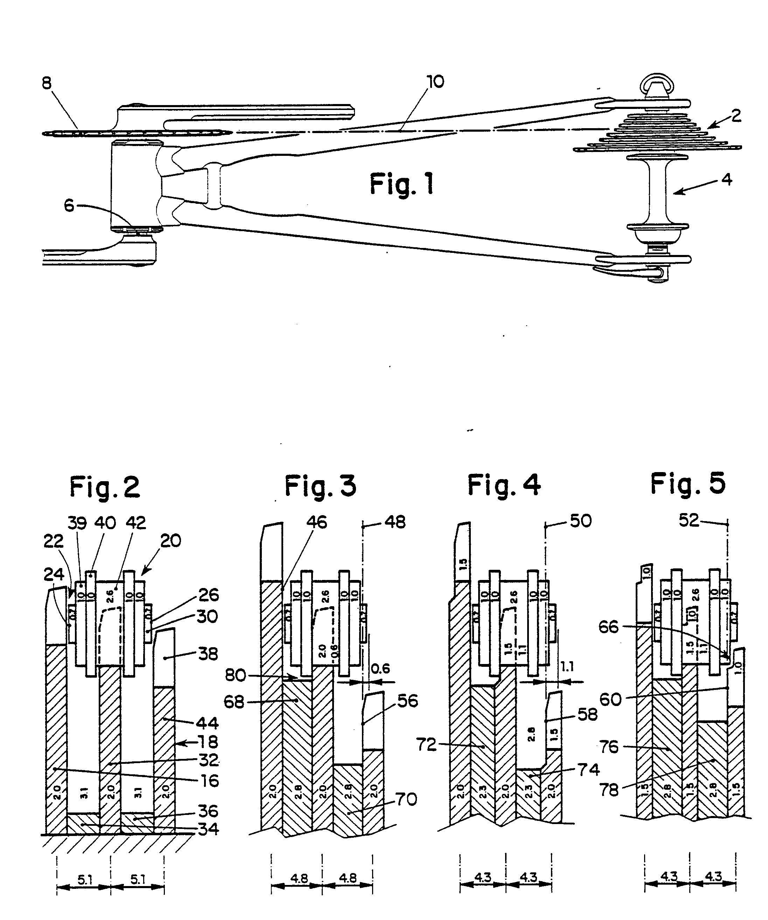

Die Fig. 1 veranschaulicht die allgemein bekannte Anordnung eines angetriebenen Zahnkranzsatzes 2 an der Nabe 4 des nicht dargestellten Hinterrades eines Fahrrades mit einer Kettenschaltung. An der Kurbelwelle 6 ist ein treibender Zahnkranz 8 befestigt. Die gerade Kettenlinie zwischen dem antreibenden Zahnkranz 8 und dem angetriebenen Zahnkranzsatz 2 ist durch eine Strichpunktlinie 10 angedeutet, die parallel zur Rahmenmittelebene verläuft.

Aus der Schnittdarstellung eines Teiles eines Zahnkranzsatzes entsprechend dem Stand der Technik in Fig. 2 ist zu sehen, dass bisher der Abstand zwischen einem Zahnkranz 16 und einem übernächsten Zahnkranz 18 durch die grösste Breite der Kette 20 bestimmt ist zusätzlich eines notwendigen Spiels 22, um einen klemmungsfreien Lauf der Kette zu ermöglichen. Die grösste Breite der Kette entspricht dem Abstand zwischen den beiden Endflächen 24, 26 der Bolzen 30 der Kette. Der sich im Eingriff mit der Kette 20 befindende Zahnkranz 32 befindet sich genau in der Mitte zwischen diesen Zahnkränzen 16 und 18, indem zwischen den Zahnkränzen 16, 32 und 32, 18 Distanzringe 34, 36 gleicher Breite eingesetzt sind. Die bisherige Dimensionierung geht somit von der Vorstellung aus, dass sich die Zähne 38 der Zahnkränze in symmetrischem Eingriff mit der Kette, bezogen auf ihre Querausdehnung, befinden, wie in Fig. 2 für den mittleren Kettenkranz durch Strichlinien angedeutet ist. In der Darstellung sind die verschiedenen Breiten, d. h. der Zahnkränze, der Distanzringe, des Bolzenüberstandes, der Kettenlaschen 39, 40 und der Kettenhülse 42, durch Ziffern angegeben, die auf einen Zehntelmillimeter genau die Breite in Millimetern angeben. Die Darstellungen der Fig. 3 bis 5 entsprechen derjenigen der Fig. 2, so dass für sich entsprechende Teile die Bezugsziffern weggelassen wurden. Die in den Fig. 3 bis 5 eingetragenen Ziffern für die Breitenmasse zeigen im Vergleich zu denjenigen der Fig. 2 deutlich, in welchem Masse durch die erfindungsgemässen Massnahmen ein geringerer Platzbedarf für eine bestimmte Anzahl von Zahnkränzen erzielt wird. Dabei wurde in den Fig. 3 und 4 von einer gleichen Breite des Blatteiles 44 der Zahnkränze ausgegangen und in allen Figuren von einer gleichen Breite der Kette 20.

Aus den Darstellungen der Fig. 3 bis 5 kann entnommen werden, dass der Abstand von einer Zahnkranzseitenfläche 46 zur Radialebene 48, 50, 52 der Zahnseitenfläche 56, 58, 60 eines übernächsten kleineren Zahnkranzes kleiner ist als die grösste Breite der Kette einschliesslich ihres Spiels 22 zum seitlich an die Kette angrenzenden Zahnkranz 16.

Bei den Ausführungsbeispielen der Fig. 3 und 4 ist dieses Grössenverhältnis dadurch verwirklichbar, dass einander benachbarte Zahnkränze, z. B. 32 und 18, einen Durchmesserunterschied entsprechend einem Unterschied von z. B. vier Zähnen am Umfang bei der üblichen Zahnteilung aufweisen. Entsprechend überragt ein Teil der Kette, der sich zwischen der Stirnfläche 26 des Kettenbolzens und der Radialebene 48 bzw. 50 befindet, in axialer Richtung den kleineren Zahnkranz 18. Dies ergibt sich durch den asymmetrischen Eingriff der Zähne des Zahnkranzes 32 in die Kette, wie durch die Strichliniendarstellung dieser Zähne in den Fig. 3 und 4 veranschaulicht ist. Die erzielte Verkürzung des für die Anordnung der Zahnkränze erforderlichen axialen Abstandes zwischen einem Zahnkranz 16 und den Zähnen des übernächsten Zahnkranzes 18 entspricht im Beispiel nach Fig. 3 0,6 mm und im Beispiel nach Fig. 4 1,1 mm, wie den in den Figuren eingetragenen Massangaben zu entnehmen ist.

Im Ausführungsbeispiel nach Fig. 4 ergibt sich eine weitere axiale Verkürzung zwischen benachbarten Zahnkränzen auf 4,3 mm anstatt von 4,8 mm des Ausführungsbeispiels nach Fig. 3, indem die Zahnkränze im Bereich ihres Kontaktes mit der Kette entsprechend der Zahnseitenfläche 58 schmaler ausgeführt sind, d. h. 1,5 mm statt 2 mm breit. Entsprechend dieser Verschmälerung im radial äusseren Zahnkranzbereich kann der nächstkleinere Zahnkranz näher an den angrenzenden grösseren Zahnkranz herangerückt werden. Dies wird beispielsweise durch Verwendung eines entsprechend schmaleren Zwischenringes mit einer Breite von 2,3 mm statt 2,8 mm des Ausführungsbeispiels nach Fig. 3 möglich.

Es versteht sich, dass die Verschmälerung der Zähne von 2 auf 1,5 mm in den Ausführungsbeispielen nach Fig. 4 und 5 den ganzen Zahnkranz umfassen kann, indem entsprechend in ihrer Breite dimensionierte Zwischenringe 76, 78 verwendet werden (Fig. 5).

Fig. 5 zeigt ein Ausführungsbeispiel, bei dem die Durchmesserdifferenz zwischen benachbarten Zahnkränzen nur zwei Zähnen entspricht. Um dennoch einen geringeren Abstand zwischen einem Zahnkranz und den Zähnen eines übernächsten Zahnkranzes verwirklichen zu können, als der Breite der Kette entspricht, ist im Bereich der Zahnspitzen auf der dem nächstgrösseren Zahnkranz zugekehrten Seite eine Ausnehmung 66 eingearbeitet. Diese Ausnehmung erstreckt sich nur über einen verhältnismässig kurzen Teil der Zahnhöhe und führt deshalb praktisch nicht zu einer höheren Belastung der Zähne oder der Kette als beim Ausführungsbeispiel der Fig. 4. Die Grösse der Ausnehmung ist durch die Abmessungen der Kettenlasche 39 bestimmt, wie sich aus der Darstellung in Fig. 5 ergibt.

Die Ausführungsbeispiele der Fig. 3 bis 5 zeigen weiterhin Zwischen- bzw. Distanzringe 68, 70 ; 72, 74 und 76, 78, die im Unterschied zu den üblichen Distanzringen 34, 36 mit verhältnismässig kleinem Durchmesser einen grösstmöglichen Durchmesser unter Berücksichtigung eines ausreichenden radialen Spiels 80 zwischen dem äusseren Umfang der Zwischenringe und den Kettenlaschen 40 aufweisen. Durch diese Dimensionierung der Zwischenringe ergibt sich eine höhere Präzision der Zahnräder entsprechend ihrer möglichst genauen Anordnung in Radialebenen. Durch diese seitliche Abstützung der Zahnkränze lassen sich die vorkommenden herstellungsbedingten Krümmungen der Zahnkränze ungefähr auf ein Drittel reduzieren, was zur effektiven Verschmälerung des ganzen Zahnkranzsatzes führt.

Aus der vorangehenden Beschreibung wird deutlich, dass aufgrund der verschiedenen erläuterten Ausführungsformen, die einzeln oder auch in Kombination miteinander anwendbar sind, sich ein Fahrrad verwirklichen lässt, das für eine gegebene maximale Kettenbreite eine grössere Anzahl von Zahnkränzen am angetriebenen Zahnkranzsatz aufweist als bisher. Auf vorteilhafte Weise kann auf einen zweiten antreibenden Zahnkranz verzichtet werden, so dass die tatsächlich zur Verfügung stehenden Schaltstufen offensichtlich werden und sich auch eine wesentlich einfachere Bedienung ergibt, die die Aufmerksamkeit des Fahrers erheblich weniger beansprucht als bei einer zusätzlichen Bedienung einer zweiten Schaltung für einen zweiten antreibenden Zahnkranz. Die Unfallgefahr wird auf diese Weise verringert. Dabei lässt sich ein ausreichend grosser Uebersetzungsbereich mit genügend Gängen verwirklichen, so dass auch weniger leistungsfähige Fahrer ohne grössere Mühe in sitzender Position grösste übliche Strassensteigungen bewältigen können und für jede Situation einen passenden Gang zur Verfügung haben. Die Vermeidung einer vorderen Schaltung erleichtert ausserdem die Anbringung eines üblichen Kettenschutzes.

Es versteht sich, dass die maximale Anzahl der am angetriebenen Zahnkranzsatz möglichen Zahnkränze auch durch die Breite der Kette bestimmt ist. Durch die Erfindung ist es deshalb auch möglich, eine breitere Kette für eine Zahnkranzzahl zu verwenden, die aufgrund des Standes der Technik nur mit schmaleren und daher weniger dauerhaften Ketten verwirklicht werden kann.

## Patentansprüche

1. Fahrrad mit einer Kettenschaltung, deren am angetriebenen Rad befestigter Satz (2) von Zahnkränzen mindestens sechs Zahnkränze aufweist und mit mindestens einem antreibenden Zahnkranz (8), wobei der Durchmesserunterschied zwischen benachbarten Zahnkränzen mindestens zwei Zähnen entspricht, dadurch gekennzeichnet, dass der kleinste Abstand von einem Zahnkranz zu den Zähnen eines übernächsten kleineren Zahnkranzes zumindest zwischen den grösseren Zahnkränzen kleiner ist als die grösste Breite der Kette (20), wobei die Kette beim Eingriff in einen zwischen einem grösseren und einem kleineren Zahnkranz angeordneten mittleren Zahnkranz in Richtung auf den kleineren Zahnkranz asymmetrisch versetzt auf dem mittleren Zahnkranz läuft und einen Teil der Breite dieses kleineren Zahnkranzes überragt.

2. Fahrrad nach Anspruch 1, dadurch gekennzeichnet, dass mindestens ein Zahnkranz im gesamten Bereich seines Kontaktes mit der Kette in axialer Richtung schmaler ausgeführt ist als in seinem dazu radial inneren Bereich (Fig. 4).

3. Fahrrad nach Anspruch 1 oder 2, dadurch gekennzeichnet, dass ein Zahnkranz im Bereich seiner Zähne auf der dem grösseren Zahnkranz zugekehrten Seite Ausnehmungen (66) aufweist, in denen der benachbarte Bereich der Kette mit Spiel läuft (Fig. 5).

4. Fahrrad nach einem der Ansprüche 1 bis 3, dadurch gekennzeichnet, dass zumindest zwischen den grösseren Zahnkränzen des angetriebenen Zahnkranzsatzes jeweils ein Zwischenring (68, 70, 72, 74, 76, 78) angeordnet ist, dessen äusserer Durchmesser bis an den Bereich der Zahnwurzel des angrenzenden kleineren Zahnkranzes heranreicht (Fig. 3, 4, 5).

## Claims

1. A bicycle with a chain gear, whose set (2) of sprockets fixed to the driven wheel has at least six sprockets and with at least one driving sprocket (8), wherein the difference of diameters between neighbouring sprockets corresponds to at least two teeth, characterized in, that at least between the larger sprockets the smallest distance from a sprocket to the teeth of the overnext smaller sprocket is smaller than the maximum width of the chain, wherein the chain, when engaging a middle sprocket which is placed between a larger and smaller sprocket, is running asymmetrical offset on said middle sprocket in direction to the smaller sprocket and is overlapping a part of the width of said smaller sprocket.

2. A bicycle according to claim 1, characterized in, that in the whole region of its contact with the chain at least one sprocket is made axially narrower than in its inner area radial thereto (Fig. 4).

3. A bicycle according to claim 1 or 2, characterized in, that one sprocket in the region of its teeth and facing the larger sprocket has a recess in which the neighbouring region of the chain is running with a clearance (Fig. 5).

4. A bicycle according to one of claims 1 to 3, characterized in, that at least between the larger sprockets of the driven sprocket set an intermediate ring (68, 70, 72, 74, 76, 78) is provided, the external diameter of which extends into the region of the tooth roots of the adjacent smaller sprocket (Fig. 3, 4, 5).

**Revendications**

1. Bicyclette munie d'un changement de vitesse par chaîne, dans lequel le jeu (2) de couronnes dentées fixé à la roue entraînée comporte au moins six couronnes dentées, et d'au moins une couronne dentée d'entraînement (8), la différence de diamètre entre deux couronnes dentées voisines correspondant au moins à deux dents, caractérisée en ce que la distance minimale entre une couronne dentée et les dents de la couronne dentée qui suit immédiatement la couronne dentée voisine plus petite est, au moins entre les grandes couronnes dentées, plus petite que la largeur maximale de la chaîne (20) et en ce que la chaîne, lorsqu'elle est en prise avec une couronne dentée médiane située entre une couronne dentée plus grande et une couronne dentée plus petite, tourne sur la couronne dentée médiane en étant décalée d'une manière dissymétrique vers la couronne dentée la plus petite et surplombe une partie de la largeur de cette couronne dentée plus petite.

2. Bicyclette selon la revendication 1, caractérisée en ce qu'au moins une couronne dentée est, dans toute la zone de son contact avec la chaîne dans le sens axial, plus étroite que dans sa zone intérieure dans le sens radial (fig. 4).

3. Bicyclette selon l'une des revendications 1 ou 2, caractérisée en ce qu'une couronne dentée comporte, dans la zone de ses dents du côté tourné vers la plus grande couronne dentée, des évidements (66) dans lesquels la zone voisine de la chaîne passe avec un certain jeu.

4. Bicyclette selon l'une des revendications 1 à 3, caractérisée en ce qu'elle comporte, au moins entre les grandes couronnes dentées du jeu de couronnes dentées entraînées, des anneaux intermédiaires (68, 70, 72, 74, 76, 78) dont le diamètre extérieur s'étend jusque dans la zone de la base des dents de la couronne dentée plus petite voisine (fig. 3, 4, 5).

Fig. 1

Fig. 2  Fig. 3  Fig. 4  Fig. 5